# EUROPEAN PATENT SPECIFICATION

(11) **EP 1 806 485 B1**
(45) Date of publication and mention of the grant of the patent: **10.11.2010**
(21) Application number: 06256611.2
(22) Date of filing: 28.12.2006
(51) Int. Cl.: F01N 1/08, F01N 1/10, F01N 3/28

(54) **Muffler and vehicle equipped with muffler**
Schalldämpfer und damit ausgerüstetes Fahrzeug
Pot d'échappement et véhicule équipé d'un pot d'échappement

(30) Priority: 06.01.2006 JP 2006001894; 23.06.2006 JP 2006174462
(43) Date of publication of application: 11.07.2007
(73) Proprietor: Yamaha Hatsudoki Kabushiki Kaisha, Shizuoka-ken Shizuoka 438-8501 (JP)
(72) Inventor: Shimomura, Kazuhiko c/o Yamaha Hatsudoki KK, Shizuoka-ken 4388501 (JP)
(74) Representative: Lamb, Martin John Carstairs

(56) References cited:
- EP-A- 0 879 937
- DE-A1- 2 527 496
- US-A- 4 361 206
- US-A- 5 016 438
- US-A- 5 608 194
- US-A- 5 921 079

## Description

### Field of the Invention

The present invention relates to a muffler and a vehicle equipped with the muffler, and more particularly the invention relates to inhibiting reduction in engine performance and to reducing exhaust noise volume.

### Background of the Invention

A conventional muffler is known, for example, that has a front chamber in which a catalyst is provided, an expansion chamber, and a conduit that passes through the expansion chamber. Holes are formed in the side surface of an upstream end portion of the conduit that protrudes in to the front chamber. Exhaust gas from an engine flows in to the conduit from the holes of the protruding section, and then flows out to the expansion chamber from the conduit at the downstream side thereof. Then, the exhaust gas flows in to the conduit again at the downstream side and finally is exhausted to the open air from a downstream end of the conduit (for example, JP-A-2005-90237 (refer to Fig. 3)).

A motorcycle equipped with this type of muffler can inhibit the generation of unpleasant noise and generate a pleasant exhaust sound. Thus, the rider of the motorcycle can enjoy the exhaust sound generated by the muffler in addition to the engine noise.

However, because attention is focused in the conventional technology on achieving a pleasant exhaust sound, not enough consideration is given to reducing exhaust noise volume.

The invention has been devised in light of the above problems, and it is an object of an embodiment thereof to provide a muffler and a vehicle equipped with the muffler that can inhibit reduction in engine performance and at the same time can reduce exhaust noise volume.

US 5,921,079 discloses an emission control apparatus or exhaust pipe structure in which a housing is separated into three chambers by two internal partition walls. The three chambers include an inlet chamber, an outlet chamber and a converter chamber intermediate the inlet and outlet chambers. The converter chamber includes an annular shaped catalytic module, and both the inlet and outlet chambers include a plurality of peripherally arranged conduits which communicate with the converter chamber to permit exhaust gases to flow in a peripheral flow pattern through the catalytic module.

US 5,608,194 discloses an exhaust pipe structure for a multi-cylinder engine. In the disclosed structure a plurality of exhaust flow paths are provided, corresponding to the number of engine cylinders. This arrangement therefore provides each cylinder with a dedicated flow path, allowing the exhaust sound for each engine cylinder to be heard independently. Furthermore, each flow path is divided into three expansion chambers, separated by two partition walls.

### Summary of the Invention

A muffler according to a first aspect of the invention comprises a single front chamber and a single expansion chamber that are respectively provided to an upstream side and a downstream side of the chamber partition, and a single conduit that passes through the expansion chamber, wherein
the conduit comprises:
an open upstream end in direct communication with the front chamber;
a conduit partition;
an outflow section provided to the upstream side of the conduit partition and defining at least one outflow hole that allows exhaust gas to flow out into the expansion chamber; and
an inflow section provided to the downstream side of the conduit partition and defining at least one inflow hole that allows exhaust gas to flow in from the expansion chamber.

The conduit partition may comprise a partition wall.

A muffler may include a front chamber and an expansion chamber that are respectively provided to the upstream side and the downstream side with a partition therebetween, and a conduit that passes through the expansion chamber. The conduit includes: an upstream end that passes through the partition and that opens in the front chamber; a partition wall that is provided at a central section of the conduit; an outflow section provided to the upstream side from the partition wall and that has a side surface in which outflow holes are formed that allow exhaust gas, which has flown in from the opening at the upstream end, to flow out to the expansion chamber; and an inflow section provided to the downstream side of the partition wall and that has a side surface formed with inflow holes that allow exhaust gas to flow in from the expansion chamber.

According to a preferred embodiment of the invention, a muffler is provided that can inhibit reduction in engine performance and at the same time can reduce exhaust noise volume. More specifically, for example, because exhaust gas flows in to the conduit via the opening formed in the upstream end of the conduit, rather than through side holes in a protruding section, there is no need to extend the conduit a long way into the front chamber. Thus, the front chamber can be effectively used to expand the exhaust gas. Accordingly, in a vehicle equipped with the muffler, it is possible to inhibit generation of unpleasant noise while generating a pleasant exhaust sound that has a volume that is suitably reduced.

Further, a catalyst device for reforming exhaust gas may be provided in the front chamber. If this structure is adopted, exhaust gas can be efficiently reformed by the catalyst device. More specifically, since there in no need to extend the conduit a long way into the front chamber, it is possible to ensure an adequate distance between the upstream end of the conduit and the downstream end of the catalyst device. Thus, unevenness of the flow of exhaust gas that passes through the catalyst device can be effectively inhibited from occurring, thereby allowing the catalyst inside the catalyst device to be effectively used for reforming the exhaust gas.

In addition, the length of an upstream side section of the conduit that is further upstream than the outflow section may be equal to or more than 1.5 times the inner diameter of the upstream side section. If this configuration is adopted, exhaust noise volume can be reduced more effectively.

It will be understood by those of skill in the art that references used herein to diameters are intended primarily to be indicative of cross-sectional area. While the preferred embodiments of the invention comprise primarily circular cross-section structures, the invention may also relate to mufflers comprising structures of other forms, or mufflers comprising structures of a variety of forms, for example part-circular, oval, triangular, square or polygonal.

In addition, the opening surface area of the inflow holes may be smaller than the pipe inner cross sectional area of a downstream side section of the conduit that is further downstream than the inflow section. Further, in this case, the opening surface area of the inflow holes may be equal to or less than 0.6 times the pipe inner cross sectional area of the downstream side section of the conduit that is further downstream than the inflow section. If this structure is adopted, the high frequency region in the exhaust noise can be effectively reduced, thereby allowing the noise volume to be suitably reduced, and an appealing exhaust sound with an accentuated low sound to be generated.

In addition, the opening surface area of the outflow holes may be larger than the pipe inner cross sectional area of an upstream side section of the conduit that is further upstream than the outflow section. In this case, the opening surface area of the outflow holes may be larger than the pipe inner cross sectional area of the upstream side section of the conduit that is further upstream than the outflow section, with the opening surface area being equal to or less than 1.5 times larger than the pipe inner cross sectional area. If this structure is adopted, the flow of exhaust gas to the expansion chamber from the conduit is made smoother.

The vehicle according to an embodiment of invention includes the above described muffler. According to this invention, a vehicle equipped with a muffler is provided that can inhibit reduction in engine performance and at the same reduce exhaust noise volume. More specifically, in the vehicle, it is possible to inhibit generation of unpleasant noise while generating a pleasant exhaust sound that has a volume that is suitably reduced. As a result, the rider of the vehicle can enjoy the sound of the exhaust noise in addition to the engine sound. Note that, the vehicle according to the invention is not particularly limited as long as the vehicle runs using the driving force of an engine. Accordingly, the vehicle may be a motorcycle (which includes mopeds (scooters)), a four wheel buggy (an all-terrain vehicle), a snowmobile, or the like.

Hereinafter, a muffler and a vehicle equipped with the muffler according to embodiments of the invention will be described with reference to the drawings. Each of the embodiments herein below describes an example in which the vehicle according to the invention is applied as a motorcycle.

### Brief Description of the Drawings

Fig. 1 is a side view of a motorcycle according to embodiments of the present invention.
Fig. 2 is a cross sectional view of a muffler according to a first embodiment of the present invention.
Fig. 3 is a first explanatory figure showing the relationship of the ratio of a length/inner diameter of an upstream side section that is upstream from an outflow section of a muffler, and a reduction amount of exhaust noise of the muffler.
Fig. 4 is a second explanatory figure showing the relationship of the ratio of the length/inner diameter of the upstream side section that is upstream from the outflow section of the muffler, and the reduction amount of exhaust noise of the muffler.
Fig. 5 is an explanatory diagram showing the relationship of a ratio of the inflow hole surface area/conduit cross sectional area of the muffler, and a sound pressure level of exhaust noise in the muffler.
Fig. 6 is a cross sectional view of a muffler according to a second embodiment of the invention.

### Detailed Description of the Drawings

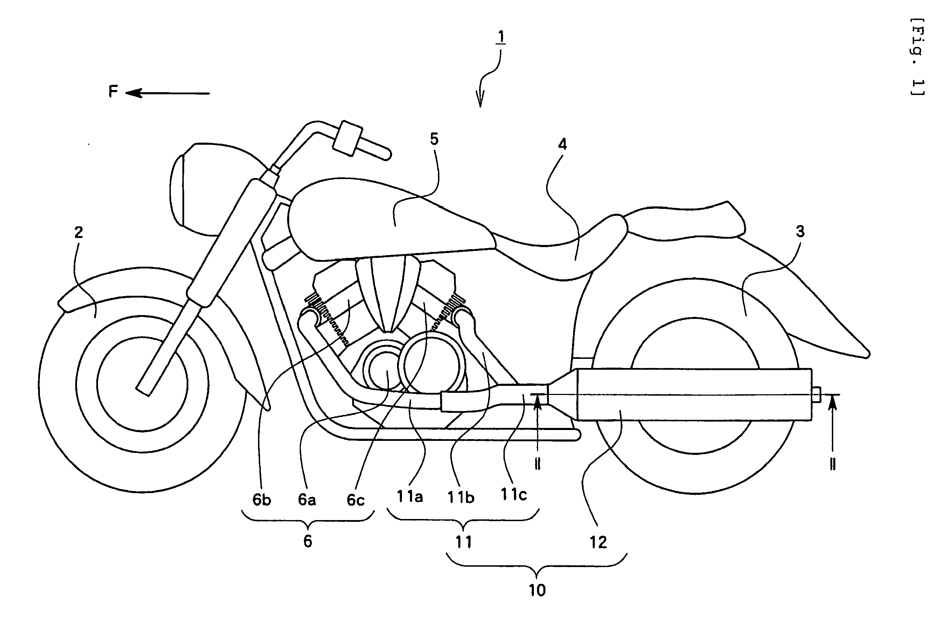

Fig. 1 is a side view of a motorcycle 1 according to a first embodiment of the invention. The motorcycle 1 includes a front wheel 2 and a rear wheel 3 that are rotatably supported by a vehicle body; a seat 4 on which a rider sits; a fuel tank 5 that stores fuel; and an engine 6 that generates driving force for driving the rear wheel 3. The engine 6 is a 4-stroke, V-type, 2 cylinder engine that has a crank case 6a, and a front cylinder head section 6b and a rear cylinder head section 6c that extend in the vehicle upward direction while respectively inclining in the vehicle forward direction (the direction indicated by the arrow F shown in Fig. 1) and the vehicle rear direction from the crank case 6a. Injectors (not shown) and throttle valves (not shown) for respectively supplying to the engine 6 fuel from the fuel tank 5 and air that mixes with the given fuel are connected to intake ports (not shown) of the front cylinder head section 6b and the rear cylinder head section 6c, respectively. The engine 6 generates driving force by combusting the fuel.

In addition, the motorcycle 1 is equipped with a muffler 10 that exhausts exhaust gas from the engine 6 and that muffles exhaust noise. An upstream end of the muffler 10 is connected respectively to exhaust ports (not shown) of the front cylinder head section 6b and the rear cylinder head section 6c. The muffler 10 has an exhaust pipe 11 and a muffler body 12. The exhaust pipe 11 includes a front exhaust pipe 11a and a rear exhaust pipe 11b that extend in the vehicle rear direction from the connecting section with the exhaust ports; and a exhaust pipe downstream end section 11c where a downstream section of the front exhaust pipe 11a and a downstream section of the rear exhaust pipe 11b merge with each other. The muffler body 12 is connected to and extends in the vehicle rear direction from the downstream end of the exhaust pipe 11, namely, the downstream end of exhaust pipe downstream end section 11c.

In the motorcycle 1, exhaust gas from the engine 6 flows from a combustion chamber of the front cylinder head section 6b and a combustion chamber of the rear cylinder head section 6c, along the respective front exhaust pipe 11a and the rear exhaust pipe 11b and merges together in the exhaust pipe downstream end section 11c. Then, the exhaust gas flows from the exhaust pipe downstream end section 11c and is introduced to the muffler body 12, before finally being exhausted in to the open air from a downstream end of the muffler body 12.

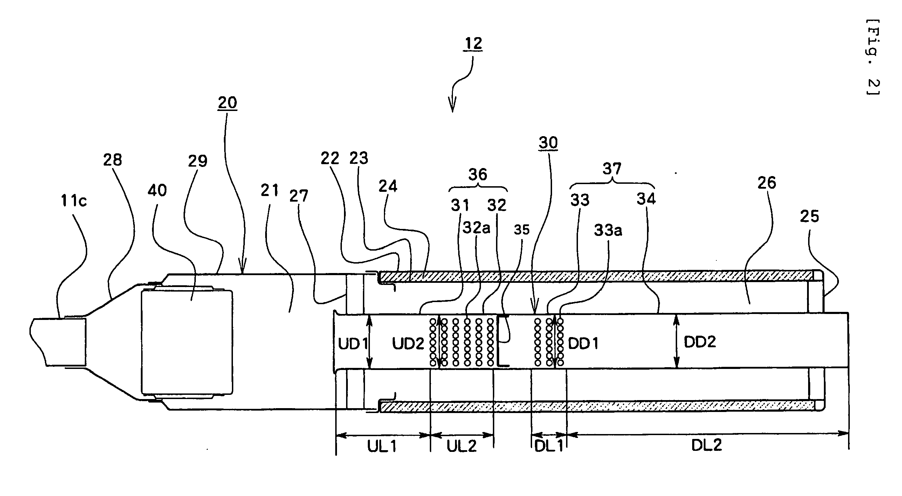

Fig. 2 is a cross sectional view of the muffler body 12 when it has been cut down line II-II shown in Fig. 1. As can be seen from Fig. 2, the muffler body 12 has a body section 20 and a single conduit 30. A single front chamber 21 and a single expansion chamber 26 are provided inside the body section 20, and the conduit 30 passes through the expansion chamber 26 of the body section 20 in the longitudinal direction.

The body section 20 is connected to the exhaust pipe downstream end section 11c at the upstream end section of the body section 20, and has a taper section 28 that has a taper shape that has an inner diameter that increases toward the downstream side from the connecting section; and an extending section 29 that has a round tubular shape and that is connected to the downstream side of the taper section 28. In addition, a round tubular shaped outer tubular section 22 extends from the downstream side of the extending section 29. In addition, an inner tubular section 23 that has a round tubular shape with an outer diameter smaller than the inner diameter of the outer tubular section 22 is provided at the inside in the diameter direction of the outer tubular section 22. As a result, a double pipe structured by the outer tubular section 22 and the inner tubular section 23 is connected to the downstream side of the extending section 29. Furthermore, a sound insulating material layer 24 is provided between the outer tubular section 22 and the inner tubular section 23. The sound insulating material layer 24 is filled with a sound insulating material like glass wool. In other words, a longitudinal section of the expansion chamber 26 is surrounded by the sound insulating material layer 24 at the outer side in the diameter direction thereof. Note that, a plurality of holes (not shown) are formed in a side surface of the inner tubular section 23, and the sound insulating material layer 24 is exposed to the inside of the expansion chamber 26 via the holes. Further, a round tubular cover section 25 is attached by welding to the downstream end of the body section 20, namely, the downstream ends of the outer tubular section 22 and the inner tubular section 23, such that the downstream end of the expansion chamber 26 is sealed.

A partition 27 that has a round tubular shape and that blocks flow of exhaust gas in the longitudinal direction inside the body section 20 is provided at a central section in the longitudinal direction of the body section 20. In addition, the expansion chamber 26 is provided in the downstream section from the partition 27 in the body section 20, and has its upstream end and downstream end respectively blocked by the partition 27 and the cover section 25. Moreover, a front chamber 21 is provided in the upstream section from the partition 27 in the body section 20, and has its upstream end and downstream end blocked respectively by the taper section 28 and the partition 27. In this manner, the partition 27 is used to provide one each of the front chamber 21 and the expansion chamber 26 in the body section 20 at the upstream side and the downstream side thereof.

A catalyst device 40 for reforming (purifying) exhaust gas is provided to straddle between the taper section 28 and the extending section 29 in the central section in the longitudinal direction in the front chamber 21. The catalyst 40 is structured such that the exhaust gas passes from the upstream side to the downstream side in the catalyst device 40 while being subjected to the reaction of the catalyst in the catalyst device 40.

Accordingly, in the muffler body 12, the exhaust gas flows first from the exhaust pipe downstream end section 11c to the section of the front chamber 21 that is at the upstream side from the catalyst device 40. The exhaust gas then continues to pass to the downstream side of the catalyst device 40, and having been reformed by the reaction of the catalyst in the catalyst device 40, flows out to the section of the front chamber 21 that is to the downstream side of the catalyst device 40. The reformed exhaust gas flows into the conduit 30 from the upstream end of the conduit 30 that is open in the partition 27. The exhaust gas then flows out to the expansion chamber 26 via outflow holes 32a of the conduit 30, and then flows into the conduit 30 again via inflow holes 33a of the conduit 30, which will be described later. Then, the exhaust gas is finally exhausted in to the open air from an opening formed at the downstream end of a tail section 34 of the conduit 30.

Further, the conduit 30 extends linearly in the longitudinal direction within the expansion chamber 26 from the partition 27 to the cover section 25 in the body section 20, thereby passing through the expansion chamber 26. More specifically, the upstream end of the conduit 30 passes though the partition 27, and opens inside the front chamber 21 that is adjacent to the expansion chamber 26 via the partition 27. Further, the downstream end of the conduit 30 passes through the cover section 25 and opens to the open air. In this manner, the conduit 30 only passes through the expansion chamber 26 in the body section 20 and does not pass through the front chamber 21. Accordingly, the conduit 30 does not pass all the way through the body section 20.

Note that, a partition 35 that blocks flow of exhaust gas in the longitudinal direction inside the conduit 30 is provided at a central section in the longitudinal direction of the expansion chamber 26. The partition 35 has a round tubular shape and is formed separately from the conduit 30. The partition 35 is attached by welding to the conduit 30.

In an upstream section 36 of the conduit 30, which is the section thereof to the upstream side of the partition 35, the section that is adjacent to the partition 35 forms an outflow section 32 that has a side surface formed with the plurality of the outflow holes 32a. The outflow holes 32a allow the exhaust gas introduced in to the upstream section 36 from the exhaust pipe downstream end section 11c via the catalyst device 40 to outflow to the expansion chamber 26.

In addition, in a downstream section 37 of the conduit 30, which is the section thereof to the downstream side of the partition 35, the section that is adjacent to the partition 35 forms an inflow section 33 that has a side surface formed with the plurality of the inflow holes 33a. The inflow holes 33a allow the exhaust gas, which has already flown out to the expansion chamber 26 from the upstream section 36 via the outflow holes 32a, to inflow to the downstream section 37.

Note that, the partition 35 is positioned to be at a location in the conduit 30 between the outflow section 32 and the inflow section 33 in the expansion chamber 26. Further, the plurality of outflow holes 32a and the inflow holes 33a have circular shapes with diameters that are the same. The outflow holes 32a and the inflow holes 33a are respectively positioned in a regular manner at predetermined intervals apart in the longitudinal direction and the circumferential direction of the conduit 30 in the respective side surfaces of the outflow section 32 and the inflow section 33. In addition, the total number of the inflow holes 33a formed in the inflow section 33 is smaller than the total number of the outflow holes 32a formed in the outflow section 32.

Moreover, the tail section 34, which is the section to the downstream side from the inflow section 33 in the downstream section 37, is a section that leads exhaust gas that has flown in to the downstream section 37 via the inflow holes 33a in the expansion chamber 26 to the open air. The side surface of the tail section 34 is not formed with holes, like the outflow holes 32a and the inflow holes 33a, that allow inflow and outflow of exhaust gas to/from the expansion chamber 26. The downstream end of the tail section 34 is the downstream end of the conduit 30, and protrudes to the downstream side of the muffler body 12 from the cover section 25 of the body section 20. The downstream end of the tail section 34 is formed with an opening. Exhaust gas is exhausted from this opening to the open air.

Note that, a head section 31 is the section to the upstream side from the outflow section 32 in the upstream section 36, and is a section that receives exhaust gas from the front chamber 21 and leads it as far as the outflow section 32 at the downstream side thereof. The side surface of the head section 31 is not formed with holes, like the outflow holes 32a and the inflow holes 33a, that allow inflow and outflow of exhaust gas to/from the expansion chamber. An upstream end section of the head section 31 is connected to the partition 27. An upstream end surface of the head section 31 (namely, the upstream end surface of the conduit 30) protrudes slightly in to the front chamber 21 from the partition 27, and opens inside the front chamber 21 in the vicinity of the partition 27. As a result, the volume of the front chamber 21 is not reduced substantially by the presence of the upstream end section of the conduit 30 therein. Accordingly, the front chamber 21 can be used effectively for expanding the exhaust gas. In addition, in the front chamber 21, it is possible to ensure that a comparatively long distance is left between the upstream end of the conduit 30 and the downstream end of the catalyst device 40. Thus, it is possible to effectively avoid generation of uneven flow of the exhaust gas inside the catalyst device 40, and reform the exhaust gas efficiently. In addition, since a good flow of exhaust gas is maintained in the catalyst device 40, and the distance between the conduit 30 and the catalyst device 40 is reduced, it is possible to promote weight reduction of the muffler 10 by reducing the longitudinal length of the muffler body 12.

In addition, the conduit 30 is structured from a single pipe-shaped member having the head section 31, outflow section 32 with the side surface formed with the outflow holes 32a, the inflow section 33 with the side surface formed with the inflow holes 33a, and the tail section 34. In other words, the conduit 30 has the upstream section 36 that is to the upstream side from the partition 35 and the downstream section 37 that is to the downstream side from the partition 35 that are formed as an integrated unit.

The inner diameter of the conduit 30, from the upstream section 36 to the downstream section 37, is constant throughout the longitudinal direction thereof. More specifically, the inner diameter UD1 of the head section 31, the inner diameter UD2 of the outflow section 32, the inner diameter DD1 of the inflow section 33, and the inner diameter DD2 of the tail section 34 are all equal to each other. With this configuration, in the conduit 30, the inner diameter UD2 of the outflow section 32 is not reduced as compared to the inner diameter UD1 of the head section 31, and thus the flow of exhaust gas to the expansion chamber 26 from the outflow holes 32a formed in the side surface of the outflow section 32 is not hindered. Accordingly, performance of the engine 6 (refer to Fig. 1) is not reduced.

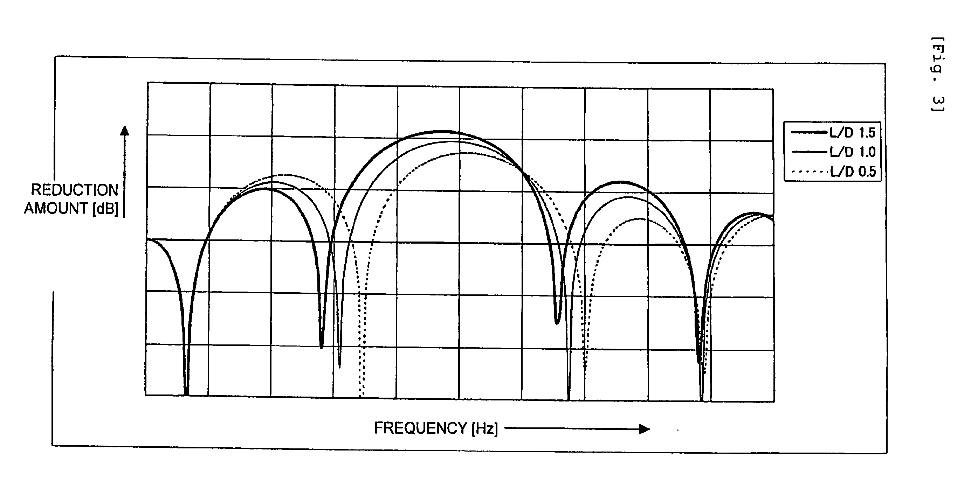

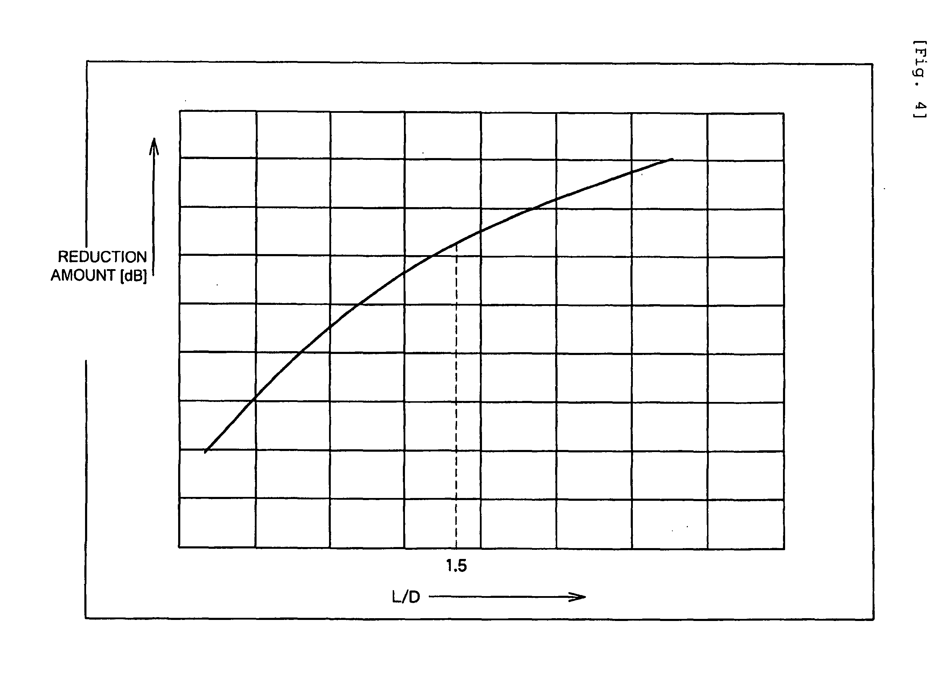

Moreover, in the conduit 30, the length UL1 of the head section 31 that is the upstream side section from the outflow section 32 is equal to or more than 1.5 times the inner diameter UD1 of the head section 31. Note that, Fig. 3 and Fig. 4 respectively show the relationship of the ratio of the length UL1 of the head section 31 to the inner diameter UD1 of the head section 31 (hereinafter referred to as the "L/D ratio"), and the reduction amount of the exhaust noise generated by the muffler 10. In Fig. 3, the horizontal axis shows the frequency [Hz] of the exhaust noise, and the vertical axis shows the reduction amount [dB] of the exhaust noise. The broken line, the thin solid line, and the thick solid line in Fig. 3 show the reduction amount [dB] of the exhaust noise at the respective frequencies when the L/D ratio is 0.5, 1.0, and 1.5, respectively. In Fig. 4, the horizontal axis shows the L/D ratio, and the vertical axis shows the reduction amount [dB] of the exhaust noise. As can be seen from Fig. 3 and Fig. 4, as the L/D ratio increases, it is possible to increase the reduction amount of the exhaust noise. Note that, increase of the L/D ratio may lead to increase in the size and weight of the muffler 10. However, in a range where the L/D ratio is smaller than approximately 1.5, the increase rate of the reduction amount of the exhaust noise with respect to the increase of the L/D ratio is comparatively high. Accordingly, if an L/D ratio of 1.5 or more is ensured, the muffler 10 can be made small, and have high effectiveness in reducing exhaust sound.

Furthermore, in the longitudinal direction of the conduit 30, the length DL2 of the tail section 34 is larger than the combined length of the length UL2 of the outflow section 32 and the length DL1 of the inflow section 33. Further, the length DL2 of the tail section 34 is larger than the length UL1 of the head section 31. Further, the length DL1 of the inflow section 33 is smaller than the length UL2 of the outflow section 32.

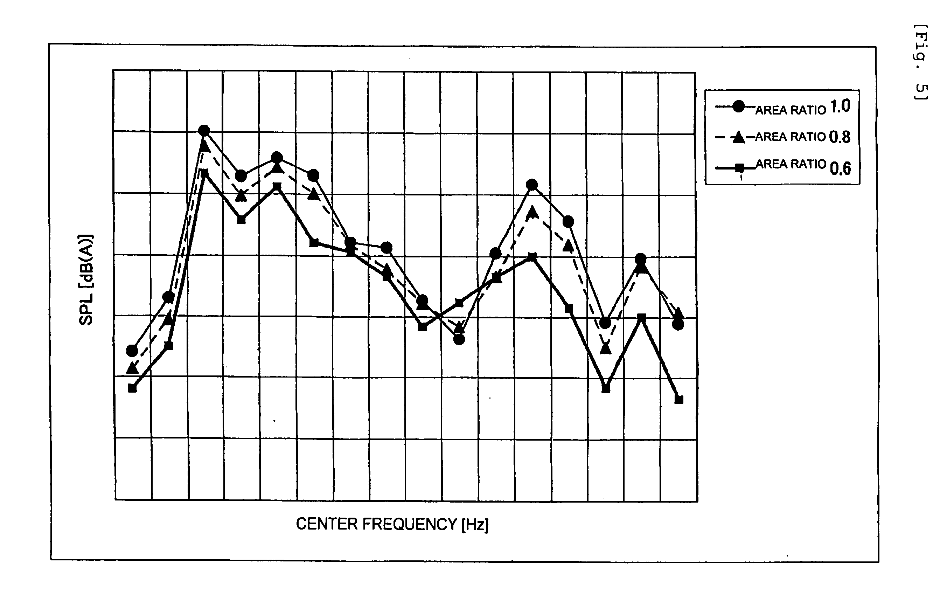

In addition, the opening surface area of the inflow holes 33a is smaller than the inner cross sectional area of the pipe of the tail section 34 that is the downstream side section from the inflow section 33 of the conduit 30. More specifically, the total opening surface area of the plurality of inflow holes 33a formed in the side surface of the inflow section 33 (the sum of the round opening surface areas of each inflow hole 33a) is smaller than the cross sectional area of the inner bore of the tail section 34 (the round cross section having the inner diameter DD2 of the tail section 34). Note that, Fig. 5 shows the relationship between the ratio of the opening surface area of the inflow holes 33a to the inner cross sectional area of the pipe of the tail section 34 (hereinafter referred to as "the ratio of the opening surface area/cross section area") and the sound pressure level of the exhaust noise generated by the muffler 10.Fig. 5 shows the center frequency [Hz] of the exhaust noise on the horizontal axis, and the Sound Pressure Level (SPL) [dB (A)] of the exhaust noise in 1/3 octave analysis on the vertical axis. Fig. 5 shows respective sound pressure levels in different frequency bands, with the circle marks showing a case when the ratio of the opening surface area/cross section area is 1.0; the triangle marks showing a case when the ratio of the opening surface area/cross section area is 0.8; and the square marks showing a case when the ratio of the opening surface area/cross section area is 0. 6. As can be seen from Fig. 5, in particular, in the case that the ratio of the opening surface area/cross section area is 0.6, as compared to the cases when the ratio of the opening surface area/cross section area is 1.0 or 0.8, the difference of the sound pressure level in the low frequency band and the sound pressure level in the high frequency band is large, and it is possible to effectively reduce the sound pressure level in the region where the frequency is comparatively high. More specifically, by setting the opening surface area of the inflow holes 33a to be smaller than the inner cross sectional area of the pipe of the tail section 34, it is possible to more effectively reduce the high frequency region in the exhaust sound, as compared to the low frequency region. Further, by making the low frequency region more conspicuous, it is possible to generate an appealing exhaust sound with an accentuated low sound.

Further, the opening surface area of the outflow holes 32a is set larger than the inner cross sectional area of the pipe of the head section 31 that is the upstream side section from the outflow section 32 in the conduit 30. More specifically, the total opening surface area of the plurality of outflow holes 32a formed in the side surface of the outflow section 32 (the sum of the round opening surface areas of each outflow hole 32a) is larger than the cross sectional area of the inner bore of the head section 31 (the round cross section having the inner diameter UD1 of the head section 31). Further, it is preferable that the ratio of the opening surface area of the outflow holes 32a with respect to the inner cross sectional area of the pipe of the head section 31 is set in a range equal to or less than 1.5 times. If this configuration is adopted, it is possible to effectively reduce fluid resistance that occurs along with flow of the exhaust gas from the conduit 30 to the expansion chamber 26.

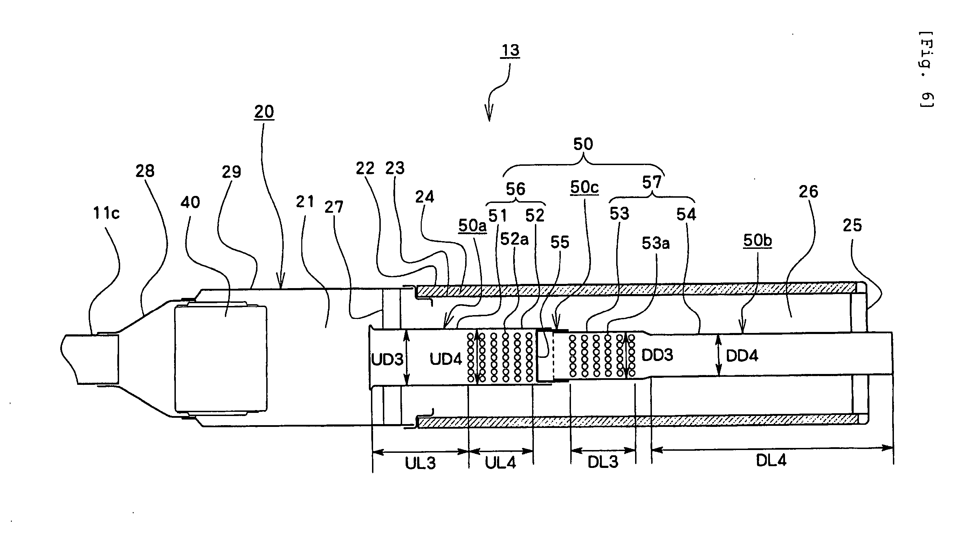

Fig. 6 is a cross sectional view of a muffler body 13 according to a second embodiment. Note that, the muffler body 13 is equipped to a motorcycle. All other structural members of the motorcycle equipped with this muffler body 13 are the same as those of the motorcycle 1 (refer to Fig. 1) according to the first embodiment, and thus a repeated explanation of these structural elements will be omitted here. Further, structural elements of the muffler body 13 that are the same as those of the muffler body 12 (refer to Fig. 2) according to the first embodiment are denoted with the same reference numerals and a repeated explanation thereof is omitted here.

The muffler body 13 has the body section 20 provided with one each of the front chamber 21 and the expansion chamber 26; and a conduit 50 that passes though the longitudinal direction of the expansion chamber 26 in the body section 20. The catalyst device 40 is provided in the front chamber 21.

Accordingly, in the muffler body 13, the exhaust gas flows first from the exhaust pipe downstream end section 11c to the section of the front chamber 21 that is at the upstream side from the catalyst device 40. The exhaust gas then continues to pass to the downstream side of the catalyst device 40, and having been reformed by the reaction of the catalyst in the catalyst device 40, flows out to the section of the front chamber 21 that is to the downstream side of the catalyst device 40. The reformed exhaust gas flows into the conduit 50 from the upstream end of the conduit 50 that is open in the partition 27. The exhaust gas then flows out to the expansion chamber 26 via outflow holes 52a of the conduit 50, and then flows into the conduit 50 again via inflow holes 53a of the conduit 50. Then, the exhaust gas is finally exhausted in to the open air from an opening formed at the downstream end of a tail section 54 of the conduit 50.

Further, the conduit 50 of the muffler body 13 extends linearly in the longitudinal direction within the expansion chamber 26 from the partition 27 to the cover section 25 in the body section 20, thereby passing through the expansion chamber 26. More specifically, the upstream end of the conduit 50 passes though the partition 27, and opens inside the front chamber 21 that is adjacent to the expansion chamber 26 via the partition 27. Further, the downstream end of the conduit 50 passes through the cover section 25 and opens to the open air. With this configuration, the conduit 50 only passes through the expansion chamber 26 in the body section 20 and does not pass through the front chamber 21. Accordingly, the conduit 50 does not pass all the way through the body section 20.

In addition, a partition 55 that blocks flow of exhaust gas in the longitudinal direction inside the conduit 50 is provided at a longitudinal direction central section of the expansion chamber 26. In an upstream section 56 of the conduit 50, which is the section thereof to the upstream side of the partition 55, the section that is adjacent to the partition 55 forms an outflow section 52 that has a side surface formed with the plurality of the outflow holes 52a. The outflow holes 52a allow the exhaust gas introduced in to the upstream section 56 from the exhaust pipe downstream end section 11c via the catalyst device 40 to outflow to the expansion chamber 26. In addition, in a downstream section 57 of the conduit 50, which is the section thereof to the downstream side of the partition 55, the section that is adjacent to the partition 55 forms an inflow section 53 that has a side surface formed with the plurality of the inflow holes 53a. The inflow holes 53a allow the exhaust gas, which has already flown out to the expansion chamber 26 from the upstream section 56 via the outflow holes 52a, to inflow to the downstream section 57. The partition 55 is positioned to be at a location in the conduit 50 between the outflow section 52 and the inflow section 53 in the expansion chamber 26. Further, the plurality of outflow holes 52a and the inflow holes 53a have circular shapes with diameters that are the same. The outflow holes 52a and the inflow holes 53a are respectively positioned in a regular manner at predetermined intervals apart in the longitudinal direction and the circumferential direction of the conduit 50 in the respective side surfaces of the outflow section 52 and the inflow section 53.

The side surface of the tail section 34, which is the section to the downstream side from the inflow section 53 in the downstream section 57, is not formed with holes, like the outflow holes 52a and the inflow holes 53a, that allow inflow and outflow of exhaust gas to/from the expansion chamber 26. The downstream end of the tail section 54 is the downstream end of the conduit 50, and protrudes to the downstream side of the muffler body 13 from the cover section 25 of the body section 20. The downstream end of the tail section 54 is formed with an opening. Exhaust gas is exhausted from this opening to the open air.

The side surface of the head section 51, which is the section to the upstream side from the outflow section 52 in the upstream section 56, is not formed with holes, like the outflow holes 52a and the inflow holes 53a, that allow inflow and outflow of exhaust gas to/from the expansion chamber. An upstream end section of the head section 51 is connected to the partition 27 . An upstream surface of the upstream section (namely, the upstream end surface of the conduit 50) protrudes slightly in to the front chamber 21 from the partition 27, and opens inside the front chamber 21 in the vicinity of the partition 27.

Moreover, the conduit 50 is structured by inter-connecting three members, namely, an upstream passage 50a, a downstream passage 50b, and a connecting section 50c. The upstream passage 50a includes a head section 51, and the outflow section 52 having the side surface formed with the outflow holes 52a. The downstream passage 50b has the inflow section 53 having the side surface formed with the inflow holes 53a, and the tail section 54. The connecting section 50c, which is formed separately from the upstream passage 50a and the downstream passage 50b, has a round tubular shape with a bottom section that forms the partition 55. In other words, in the conduit 50, the upstream section 56 further to the upstream side than the partition 55, the downstream section 57 that is further downstream than the partition 55, and the partition 55 are formed as separated units. The downstream end of the upstream passage 50a and the upstream end of the downstream passage 50b are respectively open, and the outer diameter of the upstream end of the downstream passage 50b is smaller than the inner diameter of the opening of the upstream passage 50a. The connecting section 50c is blocked at the upstream end thereof by the partition 55, and is open at the downstream end thereof. In addition, the outer diameter and inner diameter of the connecting section 50c is constant throughout the longitudinal direction thereof. Further, the outer diameter of the upstream end of the connecting section 50c and the inner diameter of the opening of the downstream end of the upstream passage 50a are substantially equal, and the inner diameter of the downstream end of the connecting section 50c and the outer diameter of the upstream end of the downstream passage 50b are substantially equal. In addition, the conduit 50 is structured such that: the upstream end of the connecting section 50c is inserted in the opening of the downstream end of the upstream passage 50a; the downstream end of the upstream passage 50a and the partition 55 of the connecting section 50c are attached by welding; the upstream end of the downstream passage 50b is inserted in the opening of the downstream end of the connecting section 50c; and the downstream end of the connecting section 50c and the upstream end of the downstream passage 50b are connected by welding.

Further, the inner diameter of the upstream passage 50a of the conduit 50 is constant throughout the longitudinal direction thereof, namely, the inner diameter UD3 of the head section 51, and the inner diameter UD4 of the outflow section 52 are equal. With this configuration, in the conduit 50, the inner diameter UD4 of the outflow section 52 is not reduced as compared to the inner diameter UD3 of the head section 51. As a result, the flow of exhaust gas to the expansion chamber 26 from the outflow holes 52a formed in the side surface of the outflow section 52 is not hindered, and thus the performance of the engine 6 (refer to Fig. 1) is not reduced.

Further, in the downstream passage 50b, the inner diameter DD3 of the inflow section 53 is smaller than the inner diameter of the upstream passage 50a, namely, the inner diameter UD3 of the head section 51, and the inner diameter UD4 of the outflow section 52. Further, in the downstream passage 50b, the inner diameter DD4 of the tail section 54 that is the downstream side section from the inflow section 53 is smaller than the inner diameter DD3 of the inflow section 53. More specifically, the inner diameter DD4 of the tail section 54 is smaller than the inner diameter UD3 of the head section 51 and the inner diameter UD4 of the outflow section 52. With this configuration, the conduit 50 has a section to the downstream side from the outflow section 52 that has a smaller inner diameter than the inner diameter of the outflow section 52. As a result, it is possible to effectively reduce exhaust noise volume generated by the muffler 10.

Moreover, in the longitudinal direction of the conduit 50, the length DL4 of the tail section 54 is larger than the combined length of the length UL4 of the outflow section 52 and the length DL3 of the inflow section 53. Further, the length DL4 of the tail section 54 is longer than the length UL3 of the head section 51. Further, the length DL3 of the inflow section 53 is equal to the length UL4 of the outflow section 52.

With this configuration, in the conduit 50, the inner diameter of the upstream section 56 from the head section 51 as far as the outflow section 52 is maintained without size reduction. Further, the inner diameter DD3 of the inflow section 53 of the downstream section 57 and the inner diameter DD4 of the tail section 54 are reduced as compared to the inner diameter of the upstream section 56 including the outflow section 52. Moreover, in the conduit 50, the inner diameter DD3 of the inflow section 53 is reduced as compared to the inner diameter UD4 of the outflow section 52, and the inner diameter DD4 of the tail section 54 is reduced as compared to the inner diameter DD3 of the inflow section 53. As a result, the inner diameter of the downstream section 57 can be reduced in a step-like manner toward the downstream side.

Note that, the muffler and the vehicle according to the invention are not limited to the examples described above but are defined by the appended claims. In this case a conduit may be provided to pass through each expansion chamber. Further, the shape, number and arrangement etc. of the outflow holes and inflow holes formed in the side surface of the conduit are not limited to those described above, and a different design may be chosen. In addition, for example, the shape, number, arrangement etc. of the outflow holes and the inflow holes may be the mutually the same, or may be mutually different. Further, for example, in the longitudinal direction of the conduit, the length of the tail section may be set to be equal to the combined length of the length of the outflow section and the length of the inflow section.

### Description of the Reference Numerals and Signs

1 Motorcycle, 2 Front wheel, 3 Rear wheel, 4 Seat, 5 Fuel tank, 6 Engine, 6a Crank case, 6b Front cylinder head section, 6c Rear cylinder head section, 10 muffler, 11 exhaust pipe, 11a Front exhaust pipe, 11b Rear exhaust pipe, 11c Exhaust pipe downstream end section, 12, 13 Muffler body, 20 Body section, 21 Front chamber, 22 Outer cylinder section, 23 Inner cylinder section, 24 Sound insulating material layer, 25 Cover section, 26 Expansion chamber, 27 Partition, 28 Taper section, 29 Extending section, 30, 50 Conduit, 31, 51 Head section, 32, 52 Outflow section, 32a, 52a Outflow holes, 33, 53 Inflow section, 33a, 53a Inflow holes, 34, 54 Tail section, 35, 55 Partition, 36, 56 Upstream section, 37, 57 Downstream section, 40 Catalyst device, 50a Upstream passage, 50b Downstream passage, 50c Connecting section, UD1, UD3 Head section inner diameter, UD2, UD4 Outflow section inner diameter, DD1, DD3 Inflow section inner diameter, DD2, DD4 Tail section inner diameter, UL1, UL3 Length of head section, UL2, UL4 Length of outflow section, DL1, DL3 Length of inflow section, DL2, DL4 Length of the tail section.

## Claims

1. A muffler (10) comprising a single front chamber (21) and a single expansion chamber (26) that are respectively provided to an upstream side and a downstream side of a chamber partition (27), and a single conduit (30) that passes through the expansion chamber, wherein
the conduit (30) comprises:
an open upstream end in communication with the front chamber (21);
a conduit partition (35);
an outflow section (32) provided to the upstream side of the conduit partition (35) and defining at least one outflow hole (32a) that allows exhaust gas to flow out into the expansion chamber (26); and
an inflow section (33) provided to the downstream side of the conduit partition (35) and defining at least one inflow hole (34) that allows exhaust gas to flow in from the expansion chamber (26).

2. The muffler of claim 1, wherein a plurality of outflow holes (32a) are provided in a side surface of the conduit (30).

3. The muffler of claim 1 or 2, wherein a plurality of inflow holes (33a) are provided in a side surface of the conduit (30) .

4. The muffler of claim 1, 2 or 3, wherein the conduit partition comprises a partition wall (35) provided at a central section of the conduit (30).

5. The muffler of any preceding claim, wherein the open upstream end of the conduit defines an opening coaxial with the conduit end.

6. The muffler of any preceding claim, wherein the open upstream end of the conduit defines an opening of corresponding diameter to the internal diameter of the conduit upstream end (UD1) .

7. The muffler of any of the preceding claims, wherein the open upstream end of the conduit is located directly adjacent the chamber partition (27).

8. The muffler of any of the preceding claims, wherein the upstream end of the conduit extends through the chamber partition (27).

9. The muffler of claim 8, wherein the upstream end of the conduit (30) extends through the chamber partition (27) and projects into the front chamber (21).

10. The muffler of claim 9, wherein the length of the upstream end of the conduit (30) that projects into the front chamber (21) is equal to or less than 1.0 times, 0.75 times, 0.5 times, 0.4 times, 0.3 times, 0.25 times or 0.2 times the internal diameter of the upstream end of the conduit (UD1).

11. The muffler of claim 9, wherein the length of the upstream end of the conduit (30) that projects into the front chamber (21) is less than or equal to half the length of an upstream side section of the conduit (UL1) that is further upstream than the outflow section (32).

12. The muffler of claim 9, wherein the length of the upstream end of the conduit (30) that projects into the front chamber (21) is less than or equal to the inner diameter of an upstream side section of the conduit (UD1) that is further upstream than the outflow section (32).

13. The muffler according to any preceding claim, wherein a catalyst device (40) for reforming exhaust gas is provided in the front chamber (21).

14. The muffler of claim 13, wherein the length of the portion of the front chamber (21) between the catalyst device (40) and the upstream end of the conduit (30) is greater than or equal to half the length of an upstream side section of the conduit (UL1) that is further upstream than the outflow section (32).

15. The muffler of claim 13, wherein the length of the portion of the front chamber (21) between the catalyst device (40) and the upstream end of the conduit (30) is greater than or equal to the inner diameter of an upstream side section of the conduit (UD1) that is further upstream than the outflow section (32).

16. The muffler according to any preceding claim, wherein the length of an upstream side section of the conduit (UL1) that is further upstream than the outflow section (32) is equal to or more than 1.5 times the inner diameter of the upstream side section (UD1).

17. The muffler according to any preceding claim, wherein the open area of the inflow holes (33a) is smaller than the conduit inner cross sectional area of a downstream side section of the conduit (DD2) that is further downstream than the inflow section (33).

18. The muffler according to claim 14, wherein the open area of the at least one inflow hole (33a) is equal to or less than 0.6 times the conduit inner cross sectional area of the downstream side section of the conduit (DD2) that is further downstream than the inflow section (33).

19. The muffler according to any preceding claim, wherein the open area of the at least one outflow hole (32a) is larger than the conduit inner cross sectional area of an upstream side section of the conduit (UD1) that is further upstream than the outflow section (32).

20. The muffler according to claim 16, wherein the open area of the at least one outflow hole (32a) is larger than the conduit inner cross sectional area of the upstream side section of the conduit (UD1) that is further upstream than the outflow section (32), the open surface area being equal to or less than 1.5 times the conduit inner cross sectional area (UD1).

21. A vehicle (1) equipped with the muffler (10) according to any preceding claim.

## Patentansprüche

1. Schalldämpfer (10), der aufweist: eine einzelne vordere Kammer (21) und eine einzelne Expansionskammer (26), die jeweils auf einer stromaufwärts gelegenen Seite und einer stromabwärts gelegenen Seite einer Kammertrennwand (27) vorhanden sind; und einen einzelnen Kanal (30), der durch die Expansionskammer hindurchgeht, wobei
der Kanal (30) aufweist:
ein offenes stromaufwärts gelegenes Ende in Verbindung mit der vorderen Kammer (21);
eine Kanaltrennwand (35);
einen Ausströmabschnitt (32), der auf der stromaufwärts gelegenen Seite der Kanaltrennwand (35) vorhanden ist und mindestens ein Ausströmloch (32a) definiert, das das Ausströmen des Auspuffgases in die Expansionskammer (26) gestattet; und
einen Einströmabschnitt (33), der auf der stromabwärts gelegenen Seite der Kanaltrennwand (35) vorhanden ist und mindestens ein Einströmloch (34) definiert, das das Einströmen des Auspuffgases aus der Expansionskammer (26) gestattet.

2. Schalldämpfer nach Anspruch 1, bei dem eine Vielzahl von Ausströmlöchern (32a) in einer Seitenfläche des Kanals (30) vorhanden ist.

3. Schalldämpfer nach Anspruch 1 oder 2, bei dem eine Vielzahl von Einströmlöchern (33a) in einer Seitenfläche des Kanals (30) vorhanden ist.

4. Schalldämpfer nach Anspruch 1, 2 oder 3, bei dem die Kanaltrennwand eine Trennwand (35) aufweist, die in einem Mittelabschnitt des Kanals (30) vorhanden ist.

5. Schalldämpfer nach einem der vorhergehenden Ansprüche, bei dem das offene stromaufwärts gelegene Ende des Kanals eine Öffnung koaxial mit dem Kanalende definiert.

6. Schalldämpfer nach einem der vorhergehenden Ansprüche, bei dem das offene stromaufwärts gelegene Ende des Kanals eine Öffnung von entsprechendem Durchmesser zum Innendurchmesser des stromaufwärts gelegenen Kanalendes (UD1) definiert.

7. Schalldämpfer nach einem der vorhergehenden Ansprüche, bei dem das offene stromaufwärts gelegene Ende des Kanals direkt benachbart der Kammertrennwand (27) angeordnet ist.

8. Schalldämpfer nach einem der vorhergehenden Ansprüche, bei dem sich das stromaufwärts gelegene Ende des Kanals durch die Kammertrennwand (27) erstreckt.

9. Schalldämpfer nach Anspruch 8, bei dem sich das stromaufwärts gelegene Ende des Kanals (30) durch die Kammertrennwand (27) erstreckt und in die vordere Kammer (21) hinein vorsteht.

10. Schalldämpfer nach Anspruch 9, bei dem die Länge des stromaufwärts gelegenen Endes des Kanals (30), die in die vordere Kammer (21) hinein vorsteht, gleich oder kleiner ist als das 1,0-fache, 0,75-fache, 0,5-fache, 0,4-fache, 0,3-fache, 0,25-fache oder 0,2-fache des Innendurchmessers des stromaufwärts gelegenen Endes des Kanals (UD1).

11. Schalldämpfer nach Anspruch 9, bei dem die Länge des stromaufwärts gelegenen Endes des Kanals (30), die in die vordere Kammer (21) hinein vorsteht, kleiner als die oder gleich der Hälfte der Länge eines stromaufwärts gelegenen Seitenabschnittes des Kanals (UL1) ist, der weiter stromaufwärts ist als der Ausströmabschnitt (32).

12. Schalldämpfer nach Anspruch 9, bei dem die Länge des stromaufwärts gelegenen Endes des Kanals (30), die in die vordere Kammer (21) hinein vorsteht, kleiner als der oder gleich dem Innendurchmesser eines stromaufwärts gelegenen Seitenabschnittes des Kanals (UD1) ist, der weiter stromaufwärts ist als der Ausströmabschnitt (32).

13. Schalldämpfer nach einem der vorhergehenden Ansprüche, bei dem eine Katalysatorvorrichtung (40) für das Umwandeln des Auspuffgases in der vorderen Kammer (21) vorhanden ist.

14. Schalldämpfer nach Anspruch 13, bei dem die Länge des Abschnittes der vorderen Kammer (21) zwischen der Katalysatorvorrichtung (40) und dem stromaufwärts gelegenen Ende des Kanals (30) größer als die oder gleich der Hälfte der Länge eines stromaufwärts gelegenen Seitenabschnittes des Kanals (UL1) ist, der weiter stromaufwärts ist als der Ausströmabschnitt (32).

15. Schalldämpfer nach Anspruch 13, bei dem die Länge des Abschnittes der vorderen Kammer (21) zwischen der Katalysatorvorrichtung (40) und dem stromaufwärts gelegenen Ende des Kanals (30) größer als der oder gleich dem Innendurchmesser eines stromaufwärts gelegenen Seitenabschnittes des Kanals (UD1) ist, der weiter stromaufwärts ist als der Ausströmabschnitt (32).

16. Schalldämpfer nach einem der vorhergehenden Ansprüche, bei dem die Länge eines stromaufwärts gelegenen Seitenabschnittes des Kanals (UL1), der weiter stromaufwärts ist als der Ausströmabschnitt (32), gleich oder größer als das 1,5-fache des Innendurchmessers des stromaufwärts gelegenen Seitenabschnittes (UD1) ist.

17. Schalldämpfer nach einem der vorhergehenden Ansprüche, bei dem die offene Fläche der Einströmlöcher (33a) kleiner ist als die innere Querschnittsfläche des Kanals eines stromabwärts gelegenen Seitenabschnittes des Kanals (DD2), der weiter stromabwärts ist als der Einströmabschnitt (33).

18. Schalldämpfer nach Anspruch 14, bei dem die offene Fläche des mindestens einen Einströmloches (33a) gleich oder kleiner ist als das 0,6-fache der inneren Querschnittsfläche des Kanals des stromabwärts gelegenen Seitenabschnittes des Kanals (DD2), der weiter stromabwärts ist als der Einströmabschnitt (33).

19. Schalldämpfer nach einem der vorhergehenden Ansprüche, bei dem die offene Fläche des mindestens einen Ausströmloches (32a) größer ist als die innere Querschnittsfläche des Kanals eines stromaufwärts gelegenen Seitenabschnittes des Kanals (UD1), der weiter stromaufwärts ist als der Ausströmabschnitt (32).

20. Schalldämpfer nach Anspruch 16, bei dem die offene Fläche des mindestens einen Ausströmloches (32a) größer ist als die innere Querschnittsfläche des Kanals des stromaufwärts gelegenen Seitenabschnittes des Kanals (UD1), der weiter stromaufwärts ist als der Ausströmabschnitt (32), wobei die offene Oberfläche gleich oder kleiner ist als das 1,5-fache der inneren Querschnittsfläche des Kanals (UD1).

21. Fahrzeug (1), das mit dem Schalldämpfer (10) nach einem der vorhergehenden Ansprüche ausgerüstet ist.

## Revendications

1. Silencieux (10), comprenant une seule chambre frontale (21) et une seule chambre d'expansion (26) agencées respectivement sur un côté amont et un côté aval d'une cloison de la chambre (27), et un seul conduit (30) passant à travers la chambre d'expansion, dans lequel
le conduit (30) comprend :
une extrémité amont ouverte, en communication avec la chambre frontale (21);
une cloison du conduit (35) ;
une section d'évacuation (32) agencée sur le côté amont de la cloison du conduit (35) et définissant au moins un trou d'évacuation (32a), permettant l'évacuation du gaz d'échappement dans la chambre d'expansion (26) ; et
une section d'admission (33) agencée sur le côté aval de la cloison du conduit (35) et définissant au moins un trou d'admission (34), permettant l'entrée du gaz d'échappement provenant de la chambre d'expansion (26).

2. Silencieux selon la revendication 1, dans lequel plusieurs trous d'évacuation (32a) sont formés dans une surface latérale du conduit (30).

3. Silencieux selon les revendications 1 ou 2, dans lequel plusieurs trous d'admission (33a) sont formés dans une surface latérale du conduit (30).

4. Silencieux selon les revendications 1, 2 ou 3, dans lequel la cloison du conduit comprend une paroi de séparation (35) agencée au niveau d'une section centrale du conduit (30).

5. Silencieux selon l'une quelconque des revendications précédentes, dans lequel l'extrémité amont ouverte du conduit définit une ouverture coaxiale à l'extrémité du conduit.

6. Silencieux selon l'une quelconque des revendications précédentes, dans lequel l'extrémité amont ouverte du conduit définit une ouverture ayant un diamètre correspondant au diamètre intérieur de l'extrémité amont du conduit (UD1).

7. Silencieux selon l'une quelconque des revendications précédentes, dans lequel l'extrémité amont ouverte du conduit est agencée en un point directement adjacent à la cloison de la chambre (27).

8. Silencieux selon l'une quelconque des revendications précédentes, dans lequel l'extrémité amont du conduit s'étend à travers la cloison de la chambre (27).

9. Silencieux selon la revendication 8, dans lequel l'extrémité amont du conduit (30) s'étend à travers la cloison de la chambre (27) et déborde dans la chambre frontale (21).

10. Silencieux selon la revendication 9, dans lequel la longueur de l'extrémité amont du conduit (30) débordant dans la chambre frontale (21) est égale ou inférieure de 1,0 fois, 0,75 fois, 0,5 fois, 0,4 fois, 0,3 fois, 0,25 fois ou 0,2 fois au diamètre intérieur de l'extrémité amont du conduit (UD1).

11. Silencieux selon la revendication 9, dans lequel la longueur de l'extrémité amont du conduit (30) débordant dans la chambre frontale (21) est inférieure ou égale à la moitié de la longueur d'une section latérale amont du conduit (UL1), agencée plus en amont que la section d'évacuation (32).

12. Silencieux selon la revendication 9, dans lequel la longueur de l'extrémité amont du conduit (30) débordant dans la chambre frontale (21) est inférieure ou égale au diamètre intérieur d'une section latérale amont du conduit (UD1), agencée plus en amont que la section d'évacuation (32).

13. Silencieux selon l'une quelconque des revendications précédentes, dans lequel un dispositif catalyseur (40) pour reformer le gaz d'échappement est agencé dans la chambre frontale (21).

14. Silencieux selon la revendication 13, dans lequel la longueur de la partie de la chambre frontale (21) agencée entre le dispositif catalyseur (40) et l'extrémité amont du conduit (30) est supérieure ou égale à la moitié de la longueur d'une section latérale amont du conduit (UL1), agencée plus en amont que la section d'évacuation (32).

15. Silencieux selon la revendication 13, dans lequel la longueur de la partie de la chambre frontale (21) agencée entre le dispositif catalyseur (40) et l'extrémité amont du conduit (30) est supérieure ou égale au diamètre intérieur d'une section latérale amont du conduit (UD1), agencée plus en amont que la section d'évacuation (32).

16. Silencieux selon l'une quelconque des revendications précédentes, dans lequel la longueur d'une section latérale amont du conduit (UL1), agencée plus en amont que la section d'évacuation (32), est égale ou supérieure de 1,5 fois au diamètre intérieur de la section latérale amont (UD1).

17. Silencieux selon l'une quelconque des revendications précédentes, dans lequel la surface ouverte des trous d'admission (33a) est inférieure à la surface de section transversale interne du conduit d'une section latérale aval du conduit (DD2), agencée plus en aval que la section d'admission (33).

18. Silencieux selon la revendication 14, dans lequel la surface ouverte du au moins un trou d'admission (33a) est égale ou inférieure de 0,6 fois à la surface de section transversale interne du conduit de la section latérale aval du conduit (DD2), agencée plus en aval que la section d'admission (33).

19. Silencieux selon l'une quelconque des revendications précédentes, dans lequel la surface ouverte du au moins un trou d'évacuation (32a) est supérieure à la surface de section transversale interne du conduit d'une section latérale amont du conduit (UD1), agencée plus en amont que la section d'évacuation (32).

20. Silencieux selon la revendication 16, dans lequel la surface ouverte du au moins un trou d'évacuation (32a) est supérieure à la surface de section transversale interne du conduit de la section latérale amont du conduit (UD1), agencée plus en amont que le section d'évacuation (32), l'aire de surface ouverte étant égale ou inférieure de 1,5 fois à la surface de section transversale interne du conduit (UD1).

21. Véhicule (1) équipé d'un silencieux (10) selon l'une quelconque des revendications précédentes.
